# EUROPEAN PATENT APPLICATION

(11) **EP 3 037 184 A1**
(43) Date of publication of application: **29.06.2016**
(21) Application number: 15164304.6
(22) Date of filing: 20.04.2015
(51) Int. Cl.: B09C 1/00, B09C 1/08, E21C 41/32, C05F 7/00, B09B 3/00, C05D 3/04

(54) **METHOD OF RECLAIMING EXCAVATIONS FOLLOWING THE EXPLOITATION OF RESOURCES FOR ROAD ENGINEERING**

(30) Priority: 22.12.2014 PL 41074514
(71) Applicant: Politechnika Lubelska, 20-618 Lublin (PL); Uniwersytet Przyrodniczy, 20-950 Lublin (PL)
(72) Inventor: Pawlowska, Malgorzata, 20-710 Lublin (PL); Pawlowski, Artur, 20-710 Lublin (PL); Pawlowski, Lucjan, 20-710 Lublin (PL); Baran, Stanislaw, 20-448 Lublin (PL); Kwiatkowski, Zygmunt, 21-003 Ciecierzyn (PL); Wesolowski, Marian, 20-807 Lublin (PL); Wróbel, Katarzyna, 21-025 Niemce (PL); Cel, Wojciech, 97-300 Piotrków Trybunalski (PL)
(74) Representative: Kaminski, Piotr

(57) **Abstract**

Method for reclaiming excavations following the exploitation of resources for road engineering characterized by dewatering the fermented sewage sludge from municipal wastewater treatment plants to at least 20% of dry mass and mixing it with ash from biomass combustion and coalassociated shales obtained from bituminous coal mining in the weight ratio of 3 : 2 : 10. The resulting mixture is used for filling the top layer of excavation, with the thickness of 0.5-2.5m, depending on the vegetation.

## Description

The object of the present invention is the method of reclaiming excavations following the exploitation of resources for road engineering.

Development of road engineering caused high demand for such minerals as sand and gravel. Exploitation of these resources leads to the creation of vast areas of completely degraded surface. Reclamation of these lands is an urgent necessity.

Creating bodies of water, possibly coupled with fish farming is one of the interesting solutions for restoring value in use to such areas. This option is viable if there is water-course in the vicinity of the excavation.

Another method involves backfilling the excavations with mineral material and creating bio-active layer on their surface. This layer of appropriate thickness is enriched with organic and/or mineral substances which improve their physical and chemical properties, thus enabling the growth of plants.

Various types of mineral waste which are harmless for the ground waters are used as the filling material. These include debris, gangue from bituminous coal mining, ash obtained from coal or biomass combustion which meets the requirements for being considered inert. This solution enables levelling of land and restoring the natural landform.

However, due to physically defective structure and chemically poor filling material composition, it is unsuitable as a stand-alone base for vegetation. Therefore, it is necessary to create 0.5-2.5m thick soil-like layer, depending on the type of intended vegetation.

Polish patent no. 53762 (Method of reclaiming post-industrial fallow lands and improving the properties of light and peat soil) presented the method of reclaiming excavations with montmorillonite-rich clay rocks, mixed with lime fertilizer (up to 20%) or with mineral fertilizers, which form a surface layer of appropriate thickness. Rock containing montmorillonite is used in its natural state or dried in the temperature up to 100°C to the point when breaking down to 5-60mm pebble size is possible. This method is interesting, albeit its application is dependent on montmorillonite availability. Moreover, it is most effective when the prepared mixture is introduced to degraded sandy soil with excessively loose structure, and does not constitute soil on its own. It might not be effective as recultivation layer due to defective water and air relationship resulting from too high share of clay fraction in the ground,

In the Ukrainian patent UA77292 (Method for reclamation of soils disturbed with open mine works) the surface of rocky excavation is covered with a layer of clay and a layer of sand, with fertile chernozem on the top. The resulting layer should be 45-55 cm thick and contain at least 2.5% of humus.

Similar method of excavation reclamation was presented in the patent UA76487 (Method for recultivating lands disturbed with open-cast mining, in which the recultivative layer comprises chernozem (40-50%) with sand (30-20%) and sapropel (30%).

Low availability of chernozem in Poland - only about 1% of country territory - limits the application of these methods. Moreover, this is the most fertile type of soil in Poland, and therefore using it for recultivation is ill-advised.

The essence of the method for reclaiming excavations following the exploitation of resources for road engineering is dewatering the post-fermentation sludge from municipal wastewater treatment plants to at least 20% of dry mass and the resulting fraction is mixed with ash obtained from biomass combustion and coal-associated shales from bituminous coal mining in the weight ratio of 3 : 2 : 10, and the resulting mixture is used to backfill the top layer of an excavation, with the layer of 0-2.5 m.

A beneficial effect of the invention includes the possibility of creating a soil-like surface layer which is used in filling the excavation following the exploitation of such resources as sand and gravel.

Example. Fermented sewage sludge from municipal sewage sludge is dewatered to about 20% of dry mass, mixed with ash obtained from biomass combustion and pyrite-poor coal-associated shales from bituminous coal mining (pH >5), in the weight ratio 3 : 2 : 10. The resulting mixture is used to backfill the top layer of excavation with the 0.5 thickness in the case of planting grass or 2-2.5 m thick in case of planting trees. A soil-like layer is created, which sludge is the source of nutrients and has humus-forming and structure-forming properties, whereas ash is the source of elements, i.e. K, Ca, Mg, which are vital for the growth of plants and act as a buffer to the acidifying ions found in coal-associated shales.

## Claims

1. ethod for reclaiming excavations following the exploitation of resources for road engineering **characterized by** dewatering the fermented sewage sludge from municipal wastewater treatment plants to at least 20% of dry mass and mixing it with ash from biomass combustion and coal-associated shales obtained from bituminous coal mining in the weight ratio of 3 : 2 : 10 and using the resulting mixture for filling the top layer of excavation, with the thickness of 0.5-2.5m.
